# EUROPEAN PATENT SPECIFICATION

(11) **EP 3 401 440 B1**
(45) Date of publication and mention of the grant of the patent: **15.01.2020**
(21) Application number: 17461530.2
(22) Date of filing: 08.05.2017
(51) Int. Cl.: E01C 7/35, C09K 11/02, C09K 11/77, E01C 17/00, E01F 9/524, E01F 9/518

(54) **METHOD FOR PRODUCING A LUMINESCENT PAVEMENT, A LACQUERED LUMINESCENT AGGREGATE AND USE OF THIS AGGREGATE**
VERFAHREN ZUR HERSTELLUNG EINER LUMINESZIERENDEN STRASSENDECKE, EIN LACKIERTER, LUMINESZIERENDER ZUSCHLAGSTOFF UND VERWENDUNG DIESES ZUSCHLAGSTOFFS
PROCÉDÉ DE PRODUCTION D'UNE SURFACE ROUTIÈRE LUMINESCENTE, AGRÉGAT LUMINESCENT LAQUÉ ET UTILISATION DE CET AGRÉGAT

(43) Date of publication of application: 14.11.2018
(73) Proprietor: STRABAG Sp. z.o.o., 05-800 Pruszków (PL)
(72) Inventor: Ruttmar, Igor, 02-934 Warsaw (PL); Otkallo, Kamil Jan, 02-495 Warsaw (PL); Kmita, Dominik Bernard, 63-900 Rawicz (PL); Przybylski, Maciej, 52-129 Wroclaw (PL)
(74) Representative: Walkiewicz, Sebastian Rafal

(56) References cited:
- WO-A1-01/98433
- WO-A1-02/40421
- GB-A- 975 223
- JP-A- 2011 174 229

## Description

The present invention relates to a method for producing a luminescent pavement, a lacquered luminescent aggregate which is used in said method and the use of such aggregate.

### State of the art

Luminescence phenomenon is an ability of a material to emit light which is not caused by thermal energy. The luminescent substances are classified based on the cause of the light emission, inter alia as:
(i) chemiluminescent, in case of substances emitting light due to a chemical reaction,
(ii) electroluminescent, in case of substances emitting light under the influence of electric energy,
(iii) photoluminescent, in case of substances emitting light due to the absorption of light from visible spectrum,
(iv) scintillating, emitting light under the influence of ionizing radiation,
(v) sonoluminescent, in case of substances emitting light under the influence of ultrasounds,
(vi) triboluminescent, in case of substances emitting light due to a deformation of a body.

In general photoluminescent substances are classified as:
(i) fluorescent, which emit light only in the presence of an inducing factor,
(ii) phosphorescent, whereby the light emission remains for a certain time after removal of an inducing factor (e.g. it is a period from seconds to hours).

Luminescent substances (chemiluminescent, photoluminescent, etc.) have been known for many years and are used in various technical fields.

Aluminates of alkaline earth metals are examples of phosphorescent substances, which are characterized by a very long time of light emission. Such substances are usually activated by rare earth elements (e.g. europium and dysprosium). One member of said group is strontium aluminate (SrAl₂O₄) developed in late 90's, for which, in case of suitable excitation conditions, the period of light emission may last even for several hours (8-10). Derivatives of alkaline earth metals aluminates (including strontium aluminate) comprising different stoichiometric amounts of alkaline earth metal in relation to the aluminate residue are also known.

Strontium aluminate is used in various technical fields, for example as:
- a substance used in light emitting elements used in fishing (JPH08116845),
- a component of luminescent articles made of plastics, rubber, glass, etc. (US2012/233895, US2004/0021407), or
- a luminescent component of decals (WO2011/096822).

This substance is also used in various applications related to the production of pavement and road markings (road signs, road lanes, etc.).

Asphalt mixtures comprising strontium aluminate are known. For example document US 2011/0140045 describes a phosphorescent asphalt mixture comprising a binder (transparent synthetic binder, bituminous binder), aggregate and a phosphorescent compound (e.g. SrAl₂O₄ doped with a rare earth metal e.g. europium and dysprosium).

In turn, international application no. WO2014/205609 discloses a three component, thermosetting epoxy-asphalt mixture, consisting of maleimide-modified asphalt comprising aliphatic amine, polyamide/polyether amine and a compatibilizer; an epoxy resin and a fluorescent material (which may be strontium aluminate doped with activator in the form of europium, samarium, erbium, neodymium, etc.).

Particles comprising a non-luminescent core coated with a luminescent layer of strontium aluminate, are also known.

Document CN201335255 discloses particles (e.g. quartz particles having various sizes - 0.07 - 1.6 mm) coated with a luminescent/reflective layer comprising a binder (comprising e.g. hydrophilic - epoxy, polyurethane, acrylic resin or combinations thereof) and a luminescent/reflective material particles (e.g. alkaline earth metal aluminate activated by a rare earth metal). The luminescent material particles may have a diameter of 0.008-0.1 mm.

JPH09328344 describes a method for producing a luminescent aggregate by melting a powder luminescent layer (comprising a phosphorescent pigment (e.g. strontium aluminate), a fluorescent pigment, and an inorganic binder) on aggregate particles.

JP2015199899 discloses light emitting granules comprising a luminescent pigment particles (e.g. strontium aluminate) coated with a silane coupling agent, white fluorescent dye and a glass powder. Such granules are mixed with a thermoplastic resin in order to obtain a coating material for road signs.

Luminescent pigments and aggregates comprising strontium aluminates are also commercially available. Examples of such products include: aggregates and pigments available from Universal One Corporation company (Ambient Glow Technology - AGT™ - SAND; Ambient Glow Technology - AGT™ - GLOW STONE), an aggregate LumiSignum available from EuroSignum sp. z o.o. company and luminescent stones available from NB Light sp. z o.o. company. In case of the aggregate Ambient Glow Technology - AGT™ - GLOW STONE and the aggregate LumiSignum, aggregate particles are made from a polyester resin bonded with a luminescent pigment particles. In turn, in case of luminescent stones available from NB Light, sp. z o.o. company, a luminescent pigment is mixed with silica and alkaline metal and alkaline earth metal silicates.

Methods of producing pavements having luminescent properties are also described in the prior art.

Document EP2774965 discloses a method for applying a photoluminescent layer including:
(i) applying a base layer of liquid binder, (ii) introducing a powdered phosphor into the binder using pressurized air, (iii) seasoning the layer obtained in the described manner and optionally applying further layers in the same way.

Other document - GB2510009 relates to a luminous pavement obtained by spraying the ground with a binder from the first dispenser, spraying material comprising photoluminescent particles (e.g. strontium aluminate activated by a rare earth metal) and non-luminescent aggregate from the second dispenser, so that the binder binds the particulate material with the ground, and then providing the layer obtained in such manner with a liquid, waterproof sealing agent. Said method includes the use of a mixture comprising 5.5-7.5% by wt. of photoluminescent particles and 92.5-94.5 % by wt. of non-luminescent aggregate. The method can be employed with respect to lighting up roads, footpaths and bike paths.

Document WO 02/40421 discloses photoluminescent plastic aggregates suitable for use in cementitious or polymeric binders, the aggregates comprising photoluminescent pigments such as inorganic phosphors, dispersed in a thermoset matrix. The aggregates may be spread on the surface of a cementitious substrate before cure to embed the aggregate over the surface.

Document GB 975 223 discloses a method of obtaining a pavement, path or sidewalk according to which thermoplastic plastic particles, e.g. polyolefines, olefin copolymers, etc. having a diameter of 3-8 mm, are distributed over a freshly produced hot bituminous surface or an old surface heated by suitable means, and which after partial melting are pressed into the pavement layer with which they bind after cooling. According to the disclosure, pigments, fillers or luminescent substances known on the filing date may be included in the composition of the plastic particles, wherein the latter being added in order to obtain light reflection effect. This invention does not disclose the use of strontium aluminate as a luminescent substance, which was not known on its the filing date.

Document GB 1 060 029 describes a method of manufacturing road signs on the surface of roads by heating a specific fragment of bituminous surface (defined by a template) and then pressing granular marking material into the pavement.

US 2 438 764 describes a method of pressing road markers (for example, brightly colored stones) in a fresh, plastic, bituminous pavement by means of a mat with holes in which said markers are placed.

Based on the above prior art it is evident that there is a need for a method for producing pavement having luminescent properties, which does not require complicated procedures and equipment, provides a durable pavement which glows for a long time and which can be employed without using significant financial means. Such method should employ the luminescent aggregate properties in an optimal manner and protect it both during the preparation of the pavement as well as later, during its use. Unexpectedly, the present invention fulfils above mentioned needs.

### Subject of the invention

The subject of the invention is a method for producing a luminescent pavement as defined in claims 1 to 9, a lacquered luminescent aggregate as defined in claims 10 to 13 and use of the lacquered aggregate as defined in claim 14.

### Advantages of the invention

The method of the invention allows for an optimal use of a luminescent aggregate in asphalt pavement. By employing it only in the layer on the road surface, whole aggregate is exposed to the sun and sight of users. Use of thermosetting carrier of the luminescent aggregate causes that during rolling of the pavement, aggregate particles do not deform and disintegrate, which could impair or even eliminate the intended technical effect in the form of glowing pavement. After compaction of hot mix asphalt, the employed luminescent aggregate becomes an integral part of the asphalt-aggregate skeleton and is permanently bonded with said skeleton.

The resin used for the lacquering effectively protects the luminescent material from atmospheric conditions and increases its durability. Furthermore, its high abrasive resistance and high dirt-pickup resistance results in an improved sun access to the aggregate, which extend the glowing duration, as well as improves the visual effect of luminescent aggregate glowing.

Experiments conducted by the Applicant showed that by using the method of the invention it is possible to obtain, in a repeatable manner, a durable pavement having a high resistance to atmospheric conditions and traffic load. The luminescent properties of the pavement obtained by the method of the invention, resulting from the employed luminescent agent, allow for obtaining a very long glowing time, reaching even 8-10 hours during summer (due to the time and angle of irradiation of the luminescent layer during the day), and 6-8 hours during winter.

This allows for marking pavement dedicated for pedestrian or bicycle traffic, either on pathway or sidewalk, or on both. It increases the awareness of pedestrians or cyclists and drivers of shared use of a road. It also increases the visibility of pathway or sidewalk. The designed technology may be also used in traffic calming methods. This contributes directly to the increase of safety of people using the pavement.

Additionally, the pavement obtained by the method of the invention is characterized by additional aesthetic value in the form of an effective afterglow.

The unexpected technical effects described above result from a specific selection of technical means used in the method of the invention, and especially from using described luminescent aggregates and the step of aggregate lacquering.

### Detailed description of the invention

In the first aspect, the invention relates to a method for producing a pavement having luminescent properties, for example surface of roads, bike paths, footpaths, sidewalks, promenades, etc, according to claim 1. The method of the invention can be used with respect to any asphalt pavement, e.g. wearing courses made from hot mix asphalt(e.g. AC, SMA, BTMM, PA type mix).

The method of the invention is used for producing pavements having luminescent properties from scratch, i.e. when in given location there is no hard-surfaced asphalt pavement. The method of the invention is conducted directly after the wearing course of the pavement is placed, while it is still hot. The step of placing the wearing course is preferably conducted by asphalt paver, but it may be also conducted manually. The thickness of the wearing course layer on which the inventive method is conducted is not critical. In general, it depends only on the design assumptions for the pavement. It is assumed, that minimal thickness of the wearing course layer should be equal to thickness of the thickest grain multiplied by 2.5. Thus, in case of producing pavement having maximum grain size of 5 mm, the minimal thickness should be 12.5 mm. Maximum thickness of a single layer should not exceed 10 cm.

Luminescent aggregate is applied on the hot asphalt pavement. The application process of the luminescent pavement may be conducted by any method known in the prior art, wherein in the preferred embodiment this step is conducted with use of spreader mounted on the asphalt paver or on the road roller which compacts the mix. In the latter case, the luminescent aggregate is distributed on the wearing course during the first pass of the road roller. In particular preferred embodiment the inventive method a spreader mounted on asphalt paver is employed, which distributes the luminescent aggregate on the mineral-asphalt mix surface after it is placed and initially compacted by vibratory screed of the paver.

Subsequently, the hot mix asphalt with the luminescent aggregate on its surface is compacted by road rollers. After the mass cools down luminescent aggregate permanently bonded with mineral-asphalt mix is obtained.

The luminescent aggregate used in the method of the invention comprises grains which are combination of thermosetting synthetic carrier and photoluminescent agent. The photoluminescent agent is alkaline earth metal aluminate activated by at least one rare earth metal. Preferably, the photoluminescent agent is strontium aluminate or its derivatives (e.g. comprising different stoichiometric amounts of strontium in relation to the aluminate residue). In a particularly preferred embodiment, the photoluminescent agent is strontium aluminate SrAl₂O₄ activated by europium and optionally dysprosium.

The thermosetting synthetic carrier may be a resin, preferably polyester resin. Such aggregates are commercially available, e.g. as products available from Universal One Corporation company or EuroSignum sp. z o.o.

The luminescent aggregate should contain particles having size adapted to the size of aggregates of the wearing course. In such manner, appropriate luminescent aggregate particles entrapment in the wearing course is provided and pushing of the mineral skeleton of the hot mix asphalt apart by larger luminescent aggregate particles is avoided, which would result in weakening said skeleton. Thus, in case of hot mix asphalt AC8 (maximum grain size - 8 mm) luminescent aggregate having particles of maximum size equal to approx. 8 mm is used. Preferably, luminescent aggregate having particles of maximum size lower than aggregate size of the wearing course is used.

The luminescent aggregate is applied on the wearing course in an amount from about 0.1 to about 1.0 kg/m², preferably in an amount from about 0.3 to about 0.8 kg/m², even more preferably in an amount from about 0.4 to about 0.5 kg/m², and most preferably in an amount from about 0.3 to about 0.4 kg/m².

The temperature of the wearing course at which the luminescent aggregate is applied depends on hot mix asphalt type and the binder type. Table 1 below shows temperature ranges for compacting wearing course for exemplary types of hot mix asphalt mixes and asphalt grades. The luminescent aggregate should be distributed on the layer having temperature within given ranges.

**Table 1. Standard temperatures for compacting exemplary hot mix asphalt**

| Asphalt types and grades | AC Base course, AC binder course, AC wearing course | SMA mix | Porous asphalt PA |
|---|---|---|---|
| 20/30 | 155° to 195° C | --- | --- |
| 35/50 | 150° to 190° C | --- | --- |
| 50/70 | 140° to 180° C | 150° to 190° C | --- |
| 70/100 | 140° to 180° C | --- | --- |
| PMB 10/40-65 | 160° to 190° C | --- | --- |
| PMB 25/55-60 | 155° to 190° C | --- | --- |
| PMB 45/80-55 | 150° to 180° C | 150° to 180° C | 140° to 185° C |
| PMB 45/80-65 | 150° to 190° C | 150° to 190° C | 150° to 185° C |
| PMB 65/105-60 | 140° to 170° C | 140° to 170° C | 140° to 170° C |
| MG 35/50 | 150° to 185° C | 150° to 185° C | --- |
| MG 50/70 | 145° to 180° C | 150° to 180° C | --- |

Furthermore, during application of the luminescent aggregate appropriate weather conditions have to be present - no rain, no wind, minimum temperature above 5°C for wearing course thicker than 3 cm, 10°C for thinner than 3 cm.

According to the invention, a lacquered luminescent aggregate is used in the method of the invention, called also lacquered luminescent topping, in the form of the luminescent aggregate being coated with a polyaspartic resin coating in an amount from about 0.1 to about 2.5 wt.%. The lacquering process may include following steps:
- placing luminescent aggregate in the mixer tank,
- adding transparent polyaspartic resin in an amount of about 0.1 - about 2.5 wt% to the mixer tank,
- mixing the mix until the resin is dry.

Step of aggregate mixing may be conducted in mixer of any type, wherein preferably vertical mixer used for concrete is used, as, according to the experiments conducted by the inventors, such choice is most advantageous and economical. The mixer vanes move near the bottom surface of the mixer, so the resin does not deposit or solidify at the bottom as in standard concrete mixer.

Polyaspartic resin may be any such resin which is commercially available, wherein it has to be a transparent material, resistant to UV radiation, having good mechanical properties, resistant to abrasion, and resistant to dirt-pickup. Exemplary polyaspartic resin is MasterSeal TC 682 available from BASF Coatings GmbH or CAPITOLCOAT A106 available from CAPITOL COATINGS Polska Sp. z o. o.

Polyaspartic resin is used in an amount from about 0.1 to about 2.5 wt%, especially in an amount from about 0.5 to about 2.0 wt%, preferably in an amount from about 0.7 to about 1.8 wt%, for example in an amount from about 0.8 to about 1.5 wt%, especially in an amount from about 1.0 to about 1.4 wt%.

As mentioned above, mixing step is conducted until the resin is dry, wherein usually this period is about 30 minutes. Mixing speed should be selected in order to avoid sticking of the aggregate particles, but also not to cause crushing of the particles in the same time.

The mixing step should be conducted under conditions providing uniform coating of the luminescent aggregate particles with the resin. The mixing temperature should be adapted to the resin used, but preferably it is in the range from about 5°C to about 25°C.

After the lacquering process is complete, the lacquered luminescent aggregate may be stored e.g. in bags, but preferably is immediately distributed on the pavement. The luminescent aggregate prepared in such manner is protected from the moisture, has improved mechanical durability and is resistant to the dirt pickup.

The luminescent aggregate may be applied on the whole wearing course or it may be applied on selected fragments thereof, for example forming marks of any shape such as lanes, arrows, marks designating the purpose of the pavement - for example indicating that the particular pavement is a bike path.

After applying the layer of the luminescent aggregate and compacting it with road roller, the pavement may optionally undergo a finishing treatment, e.g. the mass may be additionally compacted with road rollers in order to obtain appropriate stability of the mix, wheel load capacity, surface alignment, durability, etc..

In the second aspect, the invention relates to the lacquered luminescent aggregate according to claim 10 and consisting of particles being a combination of thermosetting synthetic carrier and photoluminescent agent, wherein the photoluminescent agent is an alkaline earth metal aluminate activated with at least one rare earth metal, and a polyaspartic resin coating in an amount from about 0.1 to about 2.5 wt. %.

The lacquered luminescent topping may be obtained by any known method, but preferably it is obtained by the method as described above. In such case, all information cited with respect to the process of luminescent aggregate lacquering, as well as to its advantages and properties, relate to the lacquered luminescent topping, respectively.

The topping according to the invention may be used in order to provide pavements of roads, bike paths, footpaths, sidewalks, promenades with luminescent properties. The topping according to the invention may be used with respect to any asphalt pavement, e.g. wearing courses made from hot mix asphalt (e.g. AC, SMA, BTMM, PA mix).

According to the invention, the term "about" as used above and below, should be understood as a +/-5% deviation from the given value, which reflects inaccuracies that may arise in the course of the method according to the invention.

Particle sizes given above in the whole specification are determined according to the tests described in EN 933-1 standard.

### Examples

### Example 1 (not according to the present invention)

On the substrate prepared in appropriate way, wearing course having thickness of 4 cm using asphalt paver and mineral-asphalt mix AC 11 S 35/50 have been applied. The temperature of the layer compacting was 170°C. The asphalt paver was equipped with spreader having its tank loaded with a luminescent aggregate LumiSignum (EuroSignum sp. z o.o.) having particle size of 5-8 mm. After initial compacting with the vibratory screed of the paver, the luminescent aggregate has been applied on the mineral-asphalt mix layer in an amount of 0.3 kg/m². Then, the mineral-asphalt mix with the luminescent aggregate on its surface was compacted with the use of road rollers and left to cool down.

The obtained luminescent pavement provided durability and glowing for minimum 6 hours during winter and at least 8 hours during summer.

### Example 2 (according to the present invention)

The vertical mixer tank was loaded with 100 kg of luminescent aggregate LumiSignum (EuroSignum sp. z o.o.) having maximum particle size of about 8 mm. Next, the tank of the mixer was loaded with 1.53 kg of polyaspartic resin CAPITOLCOAT 106A (CAPITOL COATINGS Polska sp. z o.o.) and agitated for about 30 minutes in temperature of 20°C. The obtained lacquered luminescent aggregate was immediately applied on the wearing course.

The step of applying the aggregate on the mineral-asphalt mix has been conducted according to the procedure described in Example 1, wherein AC 8 S 35/80 mix was used instead of AC 11 S 35/50 mix, the luminescent aggregate was applied in an amount of 0.5 kg/m² and the application process was conducted in temperature of about 160°C.

Obtained luminescent pavement provided durability and glowing for minimum 6 hours during winter and at least 8 hours during summer, wherein due to the use of polyaspartic resin the durability of the pavement was increased.

## Claims

1. A method for producing a luminescent pavement including distributing particles having luminescent properties on the hot asphalt pavement, and then pressing those particles into the pavement and leaving it to cool down, **characterized in that** a luminescent aggregate comprising particles being a combination comprising a thermosetting synthetic carrier bonded with a photoluminescent agent is used as particles having luminescent properties, wherein the photoluminescent agent is alkaline earth metal aluminate activated by at least one rare earth metal, and wherein the luminescent aggregate has a polyaspartic resin coating in an amount from about 0.1 to about 2.5 wt. %.

2. The method according to claim 1 wherein the method includes a step of initial lacquering of the luminescent aggregate before distributing it, including steps of:
putting aggregate in the tank of a mixer,
adding a transparent polyaspartic resin into the tank, and
mixing the mixture until the resin is dry.

3. The method according to claim 1 or 2, wherein the photoluminescent agent is strontium aluminate or its derivatives.

4. The method according to any of the preceding claims, wherein the photoluminescent agent is strontium aluminate SrAl₂O₄ activated by europium and optionally dysprosium.

5. The method according to any of the preceding claims, wherein the thermosetting, synthetic carrier is polyester resin.

6. The method according to any of the preceding claims, wherein the luminescent aggregate is applied in an amount from about 0.1 to about 1.0 kg/m², preferably in an amount from about 0.3 to about 0.4 kg/m²

7. The method according to any of the preceding claims, additionally comprising a step of finishing treatment.

8. The method according to any of the claims 2-7, wherein during the lacquering step, the aggregate is mixed in temperature from about 5 to about 25°C.

9. The method according to any of the preceding claims, wherein the pavement is a wearing course made from hot mix asphalt.

10. A lacquered luminescent aggregate consisting of
particles being a combination consisting of a thermosetting synthetic carrier bonded with a photoluminescent agent, wherein the photoluminescent agent is alkaline earth metal aluminate activated by at least one rare earth metal, and
a polyaspartic resin coating in an amount from about 0.1 to about 2.5 wt. %.

11. The lacquered luminescent aggregate according to claim 10, wherein the photoluminescent agent is strontium aluminate or its derivatives.

12. The lacquered luminescent aggregate according to claim 10 or 11, wherein the photoluminescent agent is strontium aluminate SrAl₂O₄ activated by europium and optionally dysprosium.

13. The lacquered luminescent aggregate according to any of the preceding claims 10-12, wherein the thermosetting, synthetic carrier is polyester resin.

14. Use of the lacquered luminescent aggregate as defined in any of claims 10-13 for producing a luminescent pavement.

## Patentansprüche

1. Verfahren zur Herstellung einer Lumineszenzdecke, umfassend das Verteilen von Partikeln mit Lumineszenzeigenschaften auf einer heißen Asphaltdecke und anschließendes Einpressen dieser Partikel in die Decke sowie abkühlen lassen, **dadurch gekennzeichnet, dass** als die Partikel mit Lumineszenzeigenschaften ein lumineszierender Zuschlagstoff verwendet wird, der die Partikel enthält, die eine einen duroplastischen, synthetischen Träger beinhaltende Kombination bilden, der mit einem photolumineszierenden Mittel verbunden ist, wobei es sich bei dem photolumineszierenden Mittel um ein mit einem Seltenerdmetall aktiviertes Aluminat eines Alkalierdmetalls handelt und wobei der lumineszierende Zuschlagstoff eine Polyasparaginharzbeschichtung in der Menge von etwa 0,1% bis etwa 2,5% Gew.-% enthält.

2. Verfahren nach Anspruch 1, umfassend den Schritt des Vorlackierens des lumineszierenden Zuschlagstoffs vor dem Verteilen mit folgenden Schritten:
Einbringen des Zuschlagstoffs in den Mischbehälter,
Hinzufügen von transparentem Polyasparaginharz in den Behälter, und
Mischen der Mischung bis zum Abtrocknen des Harzes.

3. Verfahren nach Anspruch 1 oder 2, wobei das photolumineszierende Mittel ein Strontiumaluminat oder dessen Derivate ist.

4. Verfahren nach einem der vorhergehenden Ansprüche, wobei das photolumineszierende Mittel ein Strontiumaluminat SrAl₂O₄ ist, das mit Europium und gegebenenfalls Dysprosium aktiviert wird.

5. Verfahren nach einem der vorhergehenden Ansprüche, wobei der duroplastische synthetische Träger ein Polyesterharz ist.

6. Verfahren nach einem der vorhergehenden Ansprüche, wobei der lumineszierende Zuschlagstoff in einer Menge von etwa 0,1 bis etwa 1,0 kg/m², vorzugsweise von etwa 0,3 bis etwa 0,4 kg/m² eingebracht wird.

7. Verfahren nach einem der vorhergehenden Ansprüche, das zusätzlich einen Schritt der Endbearbeitung umfasst.

8. Verfahren nach einem der Ansprüche 2 bis 7, wobei im Lackierschritt den Zuschlagstoff bei einer Temperatur von etwa 5 bis etwa 25°C gemischt wird.

9. Verfahren nach einem der vorhergehenden Ansprüche, wobei die Decke eine aus der Mineral-Asphalt-Mischung hergestellte Verschleißschicht ist.

10. Lackierter lumineszierender Zuschlagstoff, bestehend aus Partikeln, die eine einen duroplastischen, synthetischen Träger beinhaltende Kombination bilden, der mit einem photolumineszierenden Mittel verbunden ist, wobei das photolumineszierende Mittel ein mit einem Seltenerdmetall aktiviertes Aluminat eines Alkalierdmetalls ist, und einer Polyasparaginharzbeschichtung in der Menge von etwa 0,1 bis etwa 2,5 Gew.-%.

11. Lackierter, lumineszierender Zuschlagstoff nach Anspruch 10, wobei das photolumineszierende Mittel ein Strontiumaluminat oder dessen Derivate ist.

12. Lackierter, lumineszierender Zuschlagstoff nach Anspruch 10 oder 11, wobei das photolumineszierende Mittel ein Strontiumaluminat SrAl₂O₄ ist, das mit Europium und gegebenenfalls Dysprosium aktiviert wird.

13. Lackierter, lumineszierender Zuschlagstoffnach einem der vorhergehenden Ansprüche 10-12, wobei der duroplastische synthetische Träger ein Polyesterharz ist.

14. Verwendung eines lackierten, lumineszierenden Zuschlagstoffs nach einem der Ansprüche 10 bis 13 zur Herstellung einer Lumineszenzdecke.

## Revendications

1. Procédé de production d'une surface luminescente comprenant la distribution de particules ayant des propriétés luminescentes sur une surface en asphalte chaud, après laquelle les particules sont pressées et enfoncées dans la surface et laissées se refroidir, **caractérisé en ce que** en tant que particules ayant des propriétés luminescentes on utilise un agrégat luminescent contenant des particules constituant une combinaison contenant un support synthétique thermodurcissable associé à un agent photoluminescent , l'agent photoluminescent étant un aluminate d'un métal alcalino-terreux activé avec au moins un métal de terre rare, et l'agrégat luminescent ayant un revêtement de résine de polyaspargine en une quantité comprise entre environ 0,1% et environ 2,5% en poids.

2. Procédé selon la revendication 1, comprenant l'étape de pré-laquage de l' agrégat luminescent avant sa distribution, comprenant les étapes de:
placer l'agrégat dans un réservoir d'un mélangeur,
ajouter de la résine de polyaspargine transparente dans le réservoir, et
mélanger le mélange jusqu' à ce que la résine se dessèche.

3. Procédé selon la revendication 1 ou 2, dans lequel l'agent photoluminescent est l'aluminate de strontium ou ses dérivés.

4. Procédé selon l'une quelconque des revendications précédentes, dans lequel l'agent photoluminescent est un aluminate de strontium SrAl₂O₄ activé avec de l'europium et éventuellement avec du dysprosium.

5. Procédé selon l'une quelconque des revendications précédentes, dans lequel le support synthétique thermodurcissable est une résine de polyester.

6. Procédé selon l'une quelconque des revendications précédentes, dans lequel l'agrégat luminescent est appliqué en une quantité comprise entre environ 0,1 et environ 1,0 kg/m², de préférence entre environ 0,3 et environ 0,4 kg/m².

7. Procédé selon l'une quelconque des revendications précédentes, comprenant en outre une étape de finissage.

8. Procédé selon l'une quelconque des revendications de 2 à 7, dans lequel, dans l'étape de laquage l'agrégat est mélangé à une température comprise entre environ 5 et environ 25°C.

9. Procédé selon l'une quelconque des revendications précédentes, dans lequel la surface est une couche d'usure constituée d'un mélange d'asphalte minéral.

10. Agrégat luminescent laqué constitué
de particules comprenant une combinaison d'un support synthétique thermodurcissable lié à un agent photoluminescent, l'agent photoluminescent étant un aluminate de métal alcalino-terreux activé avec au moins un métal de terre rare, et
d'un revêtement de résine de polyaspargine en une quantité comprise entre environ 0,1 et environ 2,5% en poids.

11. Agrégat luminescent laqué selon la revendication 10, dans lequel l'agent photoluminescent est l'aluminate de strontium ou ses dérivés.

12. Agrégat luminescent enrobé selon la revendication 10 ou 11, dans lequel l'agent photoluminescent est un aluminate de strontium SrAl₂O₄ activé avec de l'europium et éventuellement avec du dysprosium.

13. Agrégat luminescent laqué selon l'une quelconque des revendications précédentes de 10 à 12, dans lequel le support synthétique thermodurcissable est une résine de polyester.

14. Utilisation d'un agrégat luminescent laqué selon l'une quelconque des revendications de 10 à 13 pour la production d'une surface luminescente.
